# EUROPEAN PATENT SPECIFICATION

(11) **EP 3 674 105 B1**
(45) Date of publication and mention of the grant of the patent: **04.12.2024**
(21) Application number: 18248168.9
(22) Date of filing: 28.12.2018
(51) Int. Cl.: B60C 11/16

(54) **ADVANCED ICE GRIP DEVICE AND PNEUMATIC TIRE WITH ADVANCED ICE GRIP DEVICE**
VERBESSERTE EISGRIFFVORRICHTUNG UND LUFTREIFEN MIT VERBESSERTER EISGRIFFVORRICHTUNG
DISPOSITIF D'ADHÉRENCE SUR GLACE AVANCÉ ET PNEU COMPORTANT UN DISPOSITIF D'ADHÉRENCE SUR GLACE AVANCÉ

(43) Date of publication of application: 01.07.2020
(73) Proprietor: Sumitomo Rubber Industries, Ltd., Kobe-shi, Hyogo-ken 651-0072 (JP)
(72) Inventor: KUNKEL, Daniel, Kobe-shi, Hyogo 651-0072 (JP); LEENDERTSE, Jaap, Kobe-shi, Hyogo 651-0072 (JP)
(74) Representative: Manitz Finsterwald Patent- und Rechtsanwaltspartnerschaft mbB

(56) References cited:
- EP-A1- 2 540 527
- EP-A1- 3 360 700
- EP-A1- 3 643 528
- EP-A1- 3 670 210
- WO-A1-2018/078937
- WO-A1-2019/115038
- RU-C1- 2 148 498

## Description

The present invention relates to an advanced ice grip device for pneumatic tires and to a pneumatic tire provided with one or more such devices.

Ice grip devices, also known as stud pins, are used to improve the traction of winter tires on icy roads and generally comprise a body embedded in a tread portion of the tire and a pin that protrudes from the tread portion to scrape ice. The interaction between the pin and road surface may lead to premature wear of both the road surface and the device and may also cause the device to shift within the tread portion. Shifting of the device within the tread portion may impair traction performance or even cause the device to fall out. One way to prevent shifting of the device is to reduce the size of the recess in the tread portion for receiving the device, which provides a tight fit between the device and the tread portion. However, an overly tight fit makes it difficult to install the device.

Accordingly, there remains a need for an improved ice grip device in view of these challenges.

An ice grip device in accordance with the preamble of claim 1 is known from WO 2018/078937 A1 and EP 3 360 700 A1. Related ice grip devices are known from EP 2 540 527 A1 and EP 3 643 528 A1 (document according to Article 54(3) EPC).

A first aspect provides an ice grip device having a body configured to be received in a recess provided in the tread portion of a tire and a pin connected to the body; the body comprises a top flange connected to the pin, a shaft and a bottom flange arranged adjacent to one another along a longitudinal axis, each having a cross-sectional area perpendicular to the longitudinal axis; the cross-sectional area of the shaft is smaller than the cross-sectional area of the top flange and the bottom flange, respectively; the bottom flange includes a main portion centered on the longitudinal axis and a single tail portion that extends radially outwardly from the main portion with respect to the longitudinal axis.

The bottom flange of the device therefore comprises a single tail portion that forms an extended tail, i.e. a single eccentric feature with respect to the longitudinal axis. When the device is inserted into a substantially cylindrical recess provided in the tread portion of a tire, the tail portion of the bottom flange stretches the recess at a single location, which prevents the device from rotating or shifting and improves the transmission of forces from the device to the tire, and thus improves traction performance.

Further features and advantages of the device are described in the dependent claims and in the following description. In the following, the expressions "radial" and "perpendicular" are defined relative to the longitudinal axis.

By providing the tail portion at only the bottom flange, the device is not substantially larger than other devices, and the installation of the device is not impaired. This is particularly the case in one embodiment in which the tail portion has a tail width that is smaller than or equal to a cross-sectional width of the shaft.

In one embodiment, a boundary line centered on the longitudinal axis, e.g. a circular boundary line, encloses the main portion of the bottom flange, and the tail portion extends at least 0.4 mm, preferably at least 1 mm in the radial direction beyond the boundary line. Some or all of an outer contour of the main portion may lie on the boundary line as long as the tail portion extends radially outside of the boundary line. Where the main portion and the tail portion are integrally formed, the boundary line is imaginary. However a visible boundary line where the main portion and tail portion are joined is also possible.

In the inventive ice grip device, the bottom flange includes first and second projections that form a Y-shape with the tail portion. The projections form additional edges and recesses along the periphery of the bottom flange. At least one of the projections and the tail portion may have a curved edge, but they may also have a straight edge. When the device is installed into the tread portion, tread rubber is pushed into the recesses while the additional edges of the projections bite into the rubber to prevent shifting or rotation of the device. The recesses may be formed as arc-shaped recesses that curve inward towards the longitudinal axis. In other embodiments not forming part of the present invention, in which the bottom flange does not have a Y-shape, one or more such aforementioned arc-shaped recesses may be formed at the bottom flange to accommodate tread rubber and prevent the device from shifting or rotating to improve traction performance.

The cross-sectional shape of the top flange may have various shapes. For example, the cross-section may have a substantially rectangular or a substantially trapezoidal shape.

Alternatively, the cross-section may have a substantially triangular shape. The triangular shape be rotationally symmetric by 120° about the longitudinal axis. Optionally, one of the edges of the substantially triangular shape may face towards the tail portion and extend substantially in parallel to a tail edge of the edge portion. Therefore, the top flange is widest towards the tail portion, which further helps to suppress shifting and rotation of the device after installation.

Regardless of the cross-sectional shape of the top flange, the side edges of the top flange may comprise one or more, preferably two or more arc-shaped recesses that curve inward toward the longitudinal axis. When the device is installed in the tread portion, the edges formed at each end of the arc-shaped recess bite into the surrounding tread rubber while tread rubber is pushed into the recess to prevent shifting or rotation of the device.

A further optional feature to prevent shifting and rotation of the device is to provide the bottom flange with a chamfered surface that extends at an angle, for example 30° to 60°, relative to a body bottom surface that is substantially perpendicular to the longitudinal axis. The sharp edge formed by the chamfered surface exerts an additional force on the tread rubber to improve retention of the device.

When a tire provided with ice grip devices travels along a road surface, the body portion of the device may protrude slightly from the tread portion, which causes the front edge of the top flange to contact the road surface and results in premature wear of the device. In order to counteract this effect, the top flange may have a taper that extends at an angle of 10° to 20° relative to the body top surface, which extends substantially perpendicular to the longitudinal axis, to lower the front edge of the top flange.

In another embodiment, the pin comprises an angled surface that extends at an angle relative to a substantially perpendicular body top surface and a pin top surface extending substantially parallel to the body top surface; the angled surface and the pin top surface join to form a scraping edge.

Providing such an angled surface lowers a front edge of the pin, which is the first part of the pin to make contact with the road surface. The lowered front edge suppresses premature breakage of the pin, which improves performance in the so-called overrun test and reduces damage to the road surface. At the same time, the scraping edge makes contact with the icy road surface to improve traction. This aspect can be combined with the first aspect and its embodiments to improve the traction performance of ice grip devices.

An angle of the angled surface may be 10° to 25° relative to the body top surface. A height of the angled surface along the longitudinal axis of the device may be greater than 0.4 mm in less than or equal to 0.6 mm. The angled surface may have a length corresponding to 0.3 to 0.6 times the length of the pin from the front edge to the rear edge. The front edge of the pin is preferable formed by the angled surface, while the rear edge of the pin is formed by the pin top surface.

The pin comprises a convex rear edge that curves away from the longitudinal axis. This shape adds bulk to the shape of the pin, which increases its robustness. This effect is particularly pronounced in combination with a shape in which the pin comprises at least two contact points connected by a connecting arc that curves towards the longitudinal axis.

In a further embodiment, a top surface of the pin is curved to form a dome shape.

The dome shape lowers the front edge of the pin to provide the same effect as the angled surface and the scraping edge in an alternative manner. The lowered front edge of the pin makes contact with the ground later than the front edge of a pin whose entire surface is perpendicular to the longitudinal axis of the device. The dome-shaped pin may also be combined with a bottom flange having an extended tail portion to enhance traction performance.

For both the dome shaped pin and the pin having an angled surface and a scraping edge, a front edge of the pin may comprise at least two contact points connected by a connecting arc that curves towards the longitudinal axis. The contact points of the pin dig into the icy road surface to improve traction performance. When the front edge is located on the angled surface of the pin, premature wear and breakage of the contact points can be suppressed.

A further aspect is a pneumatic tire having a tread portion provided with one or more recesses and an ice grip device installed in each recess. The pneumatic tire has a rotational direction, and the tail portion of at least one or more of the installed device extends along the rotational direction. "Extending along" refers to a configuration in which the tail portion is aligned with the rotational direction, i.e. points towards or opposite to the rotational direction. Installing the devices with the tail portions pointing opposite to the rotational direction enables the tail portions to particularly resist rotation about the tire axial direction.

In one embodiment, the tread portion comprises two shoulder portions at each edge of the tread portion in a tire axial direction and a middle portion arranged between the shoulder portions. The devices installed in at least one of the shoulder portions have a different orientation to the devices installed in the middle portion. Having devices whose tail portions are oriented in different directions may help the tire to execute other movements, such as turning, on icy surfaces. For example, the respective tail portions of the devices installed in said at least one shoulder portion extend at an angle of 45°, 90° or 180° relative to the tail portions of the devices installed in the middle portion.

In particular, the tail portions of the installed devices extend opposite to the rotational direction, but the tail portions of some or even all the installed devices can also extend in the rotational direction.

Further details and advantages of the device will be explained in reference to the following description and to the drawing.
- Fig. 1: shows an isometric view of a first embodiment of an advanced ice grip device.
- Fig. 2A: shows the device of Fig. 1 from below.
- Fig. 2B: shows an alternative configuration of the bottom flange from below.
- Fig. 3: shows a side view of the device of Fig.1 and 2.
- Fig. 4: shows an enlarged view of the top flange and pin in Fig. 3.
- Fig. 5A to 5C: show top and side views of various pin shapes.
- Fig. 6A to 6D: show top views of various embodiments.
- Fig. 7: shows a further embodiment of a device.
- Fig. 8: shows a further embodiment of a device.
- Fig. 9: shows a schematic develop view of a tire tread portion provided with stud pins.

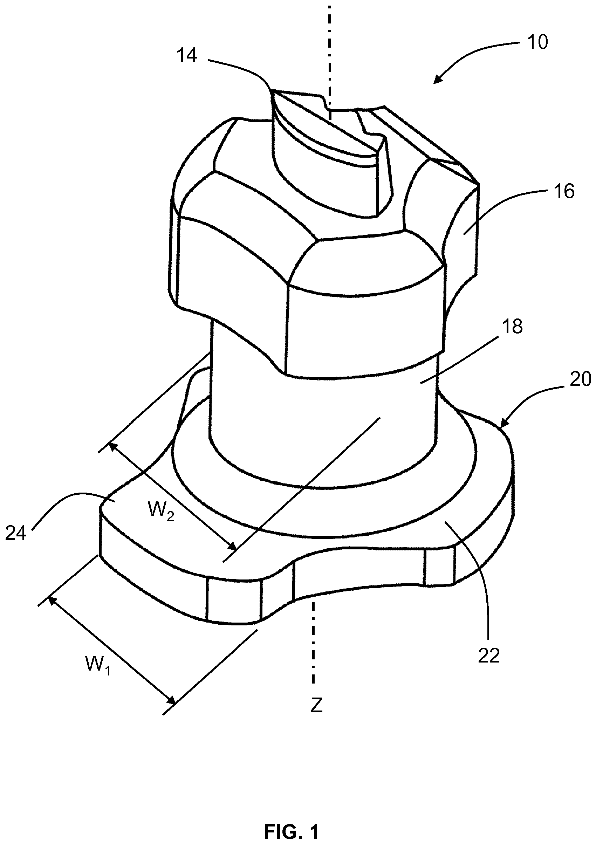

Fig. 1 to 3 show a first embodiment of an advanced ice grip device or stud pin 10, which comprises a body 12 configured to be received in a corresponding recess provided in the tread portion of a tire and a pin 14 connected to the body 12. The stud pin 10 extends along a longitudinal axis Z. The expressions "radial", "radially", "perpendicular" or "perpendicularly" are defined relative to the longitudinal axis Z.

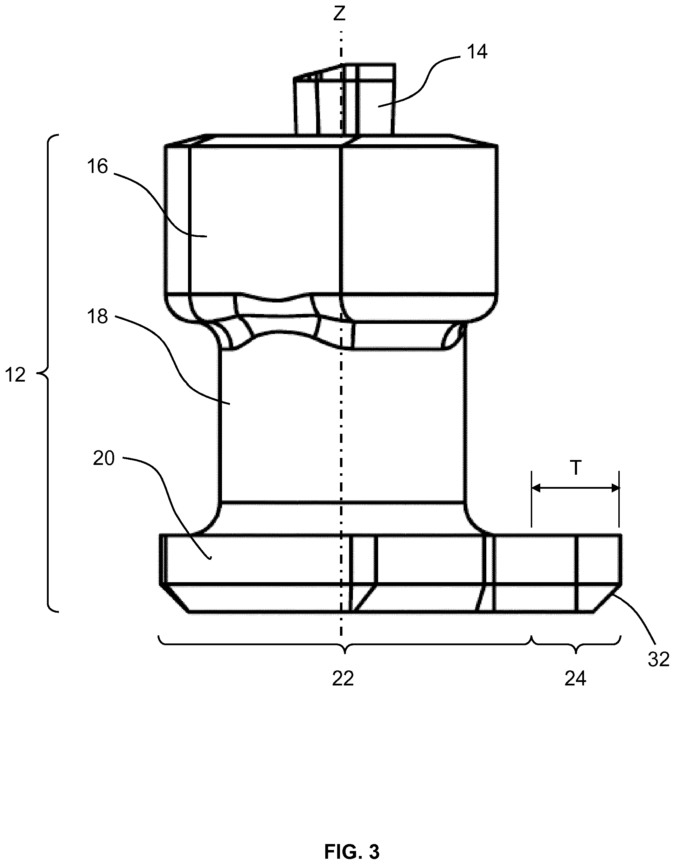

In particular, Fig. 3 shows that the body 12 comprises a top flange 16 and a bottom flange 20 that are connected by a neck or shaft 18, which has a smaller cross-sectional area than either the top flange 16 or the bottom flange 20. The pin 14 is connected to the top flange 16 and is arranged at the opposite end of the stud pin 10 from the bottom flange 20. The various parts of the stud pin 10 can be formed as separate parts, e.g. of different materials, that are joined during manufacturing.

The bottom flange 20 comprises a main portion 22 arranged along the longitudinal axis Z and a tail portion 24 that protrudes from the main portion 22 in a radial direction. The tail portion 24 therefore forms an extended tail and gives the body 12 a boot-like shape. When the stud pin 10 is installed into the tread portion of a tire, the tail portion 24, which forms the toes of the boot-like shape, digs into the tread rubber surrounding the stud pin 10 to prevent the stud pin 10 from shifting, e.g. tipping forwards or backwards, or from rotating about the longitudinal axis Z.

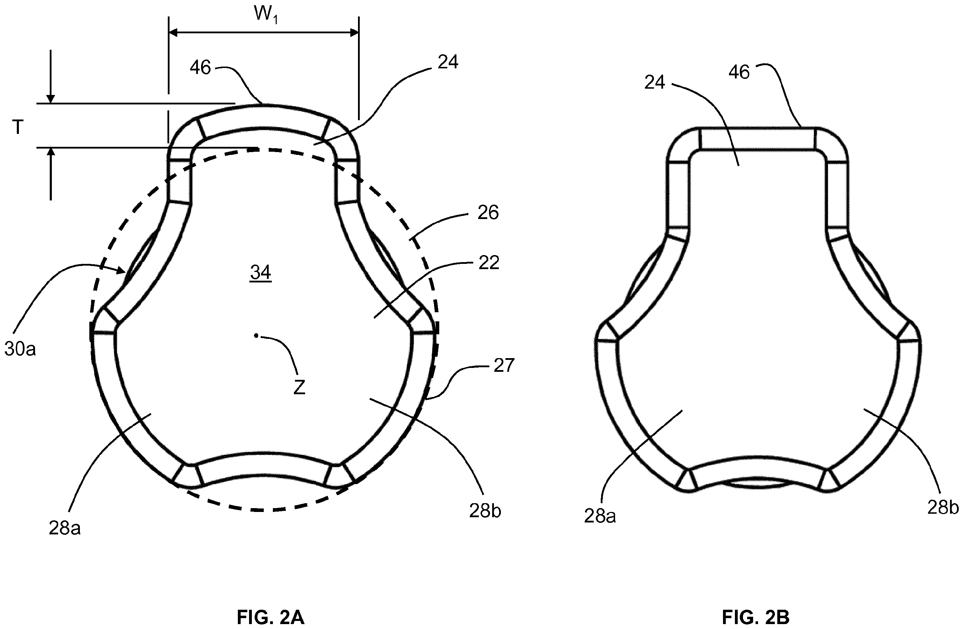

As shown in Fig. 2A, the main portion 22 of the bottom flange 20 is centered on the longitudinal axis Z and is encircled by an imaginary circular boundary line 26 that is also centered on the longitudinal axis Z. Part of an outer contour 27 of the bottom flange 20 overlaps with the boundary line 26. The boundary line 26 need not necessarily have a circular shape as long as the shape is centered on the longitudinal axis Z. The bottom flange 20 has first and second projections 28a, 28b that form a Y-shape with the tail portion 24. The outer contour 27 of the bottom flange 20 also forms arc-shaped recesses 30a relative to the boundary line 26. The outer contour 27 forms an edge at the end of each arc-shaped recess 30a that digs into surrounding tread rubber and pushes the tread rubber into the recess 30a.

The tail portion 24 forms an eccentric feature that extends radially outward from the main portion 22. A radial length T of the tail portion 24 from the boundary line 26 to a rounded tail edge 46 is at least 0.4 mm, preferably at least 1 mm. Alternatively, as shown in Fig. 2B, the tail edge 46 may be formed substantially straight across. As shown by the side view of the stud pin 10 in Fig. 3, the tail portion 24 does not substantially increase the overall size of the stud pin 10, which would make installation more difficult. A tail width W₁ of the tail portion 24 is smaller than or equal to a cross-sectional width W₂ of the shaft 18 (see Fig. 1). This size relationship ensures that the tail portion 24 of the bottom flange 20 is not overly large with respect to the body 12 of the stud pin 10. Although Fig. 1 shows a substantially cylindrical shaft 18, the same relationship of widths would apply to a shaft 18 with a different cross-sectional shape.

The bottom flange 20 has a chamfered surface 32 that extends at an angle of 30° to 60° relative to a substantially perpendicular bottom surface 34 of the body 12. The chamfered surface 32 forms a sharp knife edge that digs into the tread rubber surrounding the stud pin 10 to improve retention of the stud pin 10.

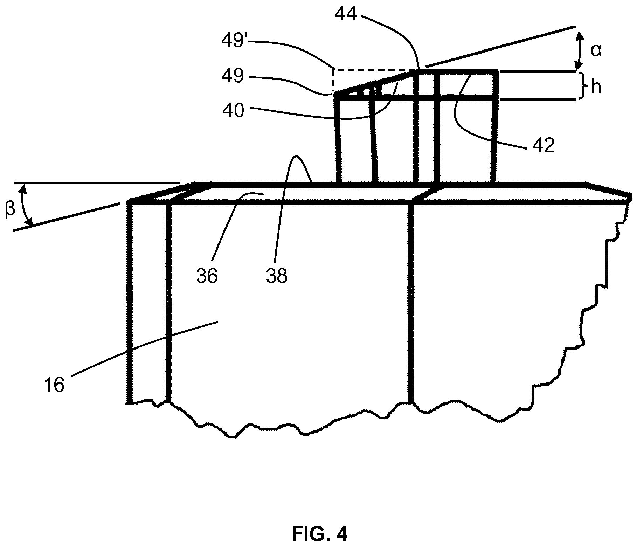

Fig. 4 shows an enlarged view of the top flange 16 and pin 14 in Fig. 3. The pin 14 comprises an angled surface 40 that extends at an angle α of 10° to 25° relative to a perpendicular top surface 38 of the body 12 and has a height h of 0.4 to 0.6 mm along the longitudinal axis Z. The pin 14 also has a substantially perpendicular top surface 42 that connects to the angled surface 40 at a straight scraping edge 44. Due to the angled surface 40, the front edge 49 of the pin 14 is lowered in comparison to a front edge 49' for which the pin 14 has no angled surface 40. When the stud pin 10 is installed in a tread portion, and the tire travels across a road surface, the lowered front edge 49 makes contact with the ground later than the front edge 49'. The delayed contact with the ground surface suppresses breakage and wear of the pin 14 along the front edge 49 and increases the durability of the stud pin 10.

Similarly, the top flange 16 comprises a taper 36 that extends at an angle β of 10° to 20° relative to the body top surface 38. The taper 36 replaces a sharp corner the top flange 16 that may come into contact with the road surface as the body 12 protrudes slightly beyond the surface of the tread portion of the tire.

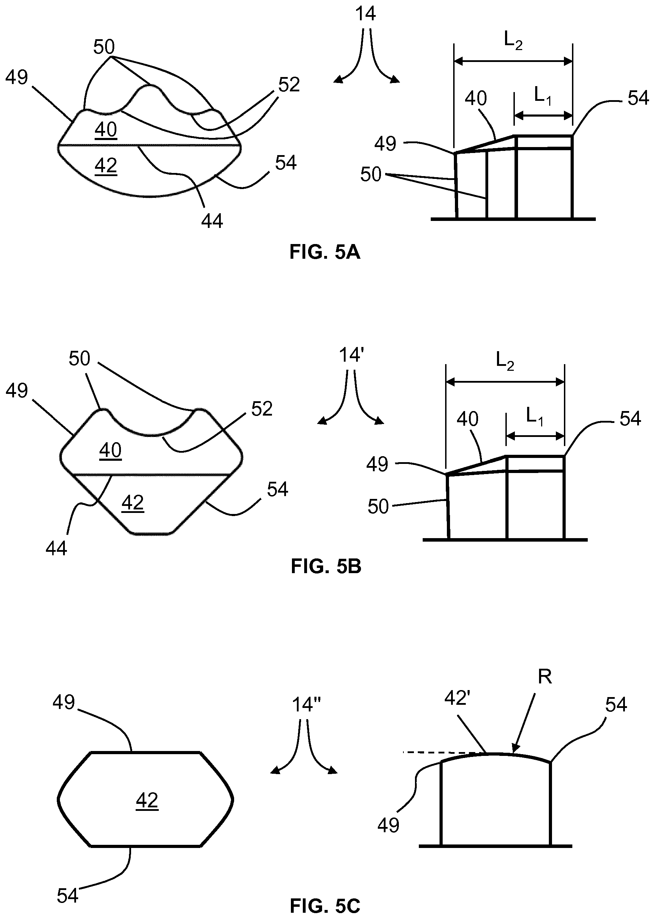

Fig. 5A shows an enlarged top view and a schematic side view of the pin 14 in Fig. 1 to 4. The front edge 49 of the pin forms three contact points 50 that are connected by two connecting arcs 52 that curve inwards toward the longitudinal axis Z. The connecting arcs 52 cause the contact points 50 to protrude outwards and scrape along icy road surfaces to increase traction performance. To compensate for the loss of volume of the pin 14 that results from the connecting arcs 52, a rear edge 54 of the pin 14 has a convex shape that curves away from the longitudinal axis Z.

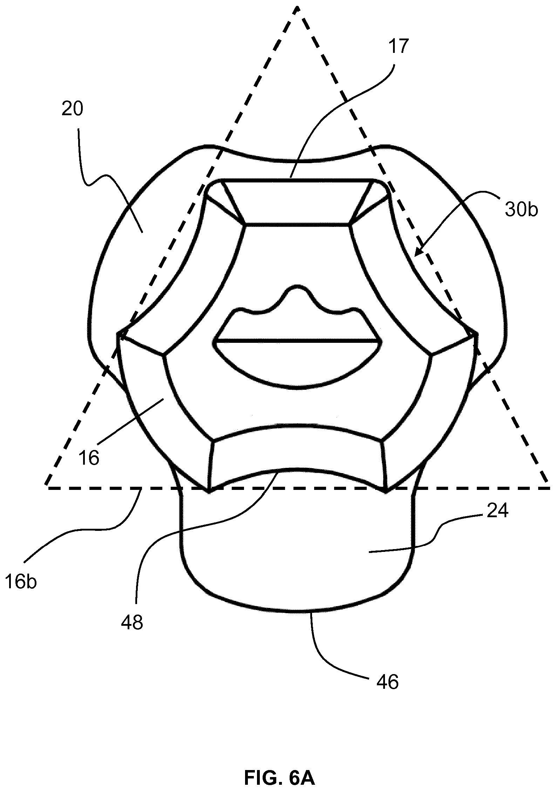

Fig. 5B shows an enlarged top view and a schematic side view of another pin 14' whose front edge 49 has only two contact points 50 that are connected by a single connecting arc 52. While the rear edge 54 of the pin 14 in Fig. 6A has a convex rounded shape, the rear edge 54 of the pin 14' in Fig. 5A forms a trapezoidal shape. In both cases the purpose of the rear edge 54 that protrudes away from the longitudinal axis Z is to increase the durability of the pin 14, 14'.

As shown in the schematic side views in Fig. 5A and 5B, a length L₁ of the angled surface 40 is 0.3 to 0.6 times the length L₂ from a front edge 49 to a rear edge 54 of the pin 14.

Fig. 5C shows an enlarged top view and a schematic side view of a further pin 14" that includes a domed top surface 42' instead of an angled surface 40 as in the pins 14, 14' of Fig. 5A and 5B. The domed top surface 42' has a suitable radius of curvature R that results in a lowered front edge 49 of the pin in a similar manner to the angled surface 40, as shown by the dashed horizontal line in Fig. 5C. The top view in Fig. 5C shows that the pin 14" has a total of six sides to form a substantially hexagonal shape that is robust and simple to manufacture. Although the pin 14" is shown with six sides, it is also possible to realize a similar shape with four sides in which the side edges curve outwards.

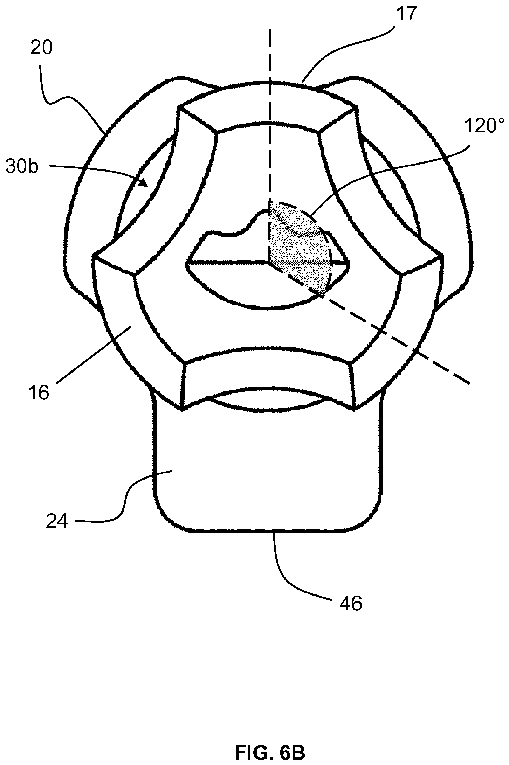

Fig. 6A shows the substantially triangular shape 16b of the top flange 16 in Fig. 1 in more detail. The triangular shape 16b is arranged so that the bottom edge of the triangular shape 16b extends in parallel to the tail edge 46 of the tail portion 24. Since the top flange 16 is wider towards the tail portion 24, the stud pin 10 is able to withstand rotation and shifting in the tire tread portion. In order to make it easier to install the stud pin 10 in a tire tread, a front edge 17 of the top flange 16 is formed substantially straight across. As an alternative, Fig. 6B shows a similar top flange 16 having a rotational symmetry of 120° about the longitudinal axis Z, so that the front edge 17 of the top flange 16 is curved.

Fig. 6A and 6B both also show that the top flange 16 is provided with arc-shaped recesses 30b, whose edges dig into the surrounding tread rubber and push the tread rubber into the arc-shaped recesses 30b and additionally prevent the stud pin 10 from shifting or rotating.

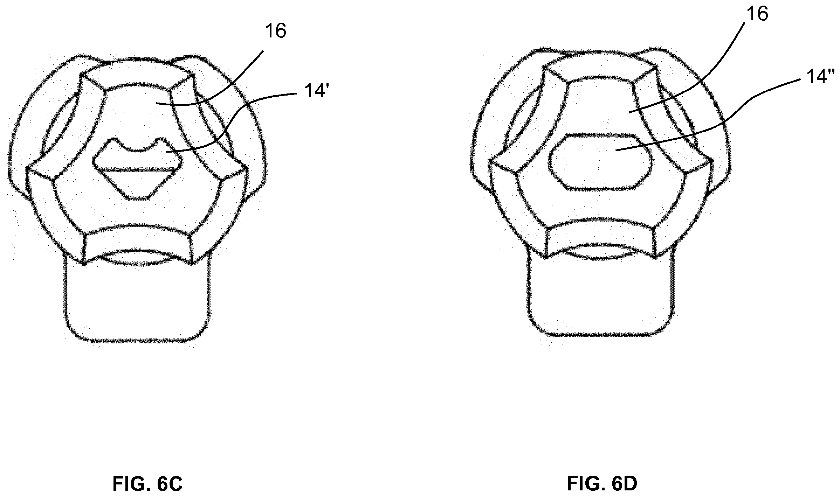

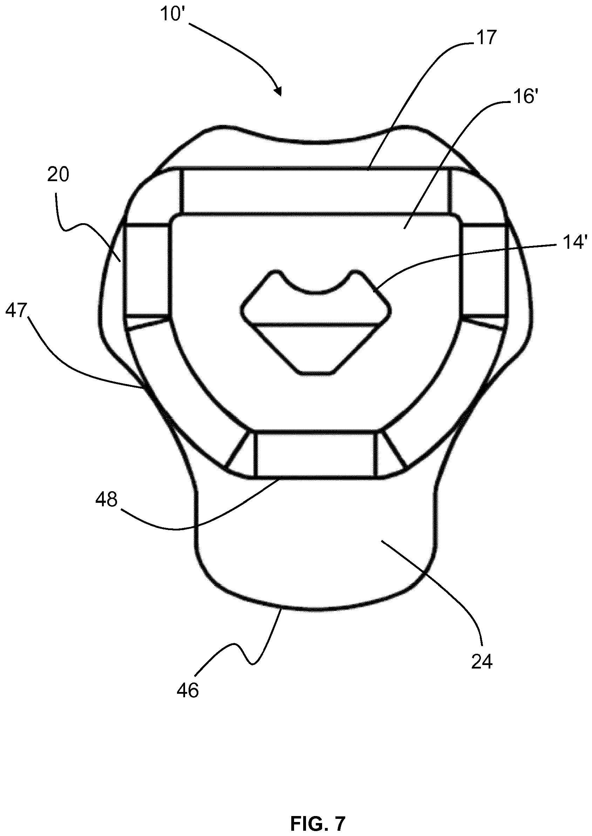

The shape of the top flange 16 shown in Fig. 6B can be combined with the various pins 14', 14" shown in Fig. 5, as illustrated in Fig. 6C and 6D as well as with the shape of the top flange 16 shown in Fig. 6A (further embodiments not illustrated). Additionally or alternatively, the shape of the top flange 16 can be modified. For example, Fig. 7 shows a stud pin 10' with a top flange 16' that has a substantially trapezoidal shape formed by straight front and rear edges 17, 48 that are connected by curved side edges 47. The rear edge 48 is substantially shorter than the front edge 17, which makes the installation of the stud pin 10" easier.

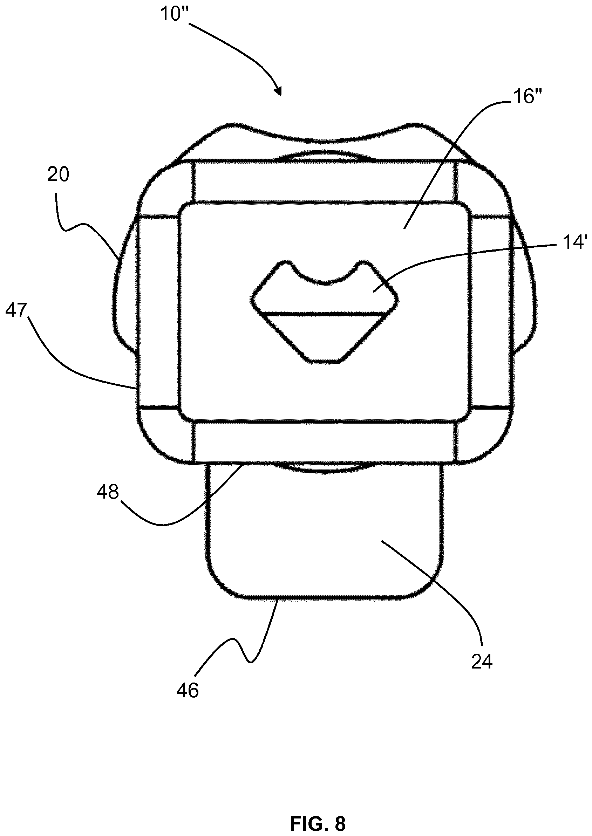

Fig. 8 shows that a top flange 16" with a substantially rectangular cross-sectional shape, with a rear edge 48 of that extend in parallel to the tail edge 46 of the tail portion 24. The rear edge 48 is longer than the side edges 47 of the top flange 16" to help the stud pin 10" maintain its orientation in the tread portion. The pin 14' of stud pin 10" is also different from the previous figures, but the bottom flange 20 has the same shape as in Fig. 2B. The rectangular top flange 16" of Fig. 8 can also be combined with the pins 14, 14" shown in Fig. 5A and 5C, respectively.

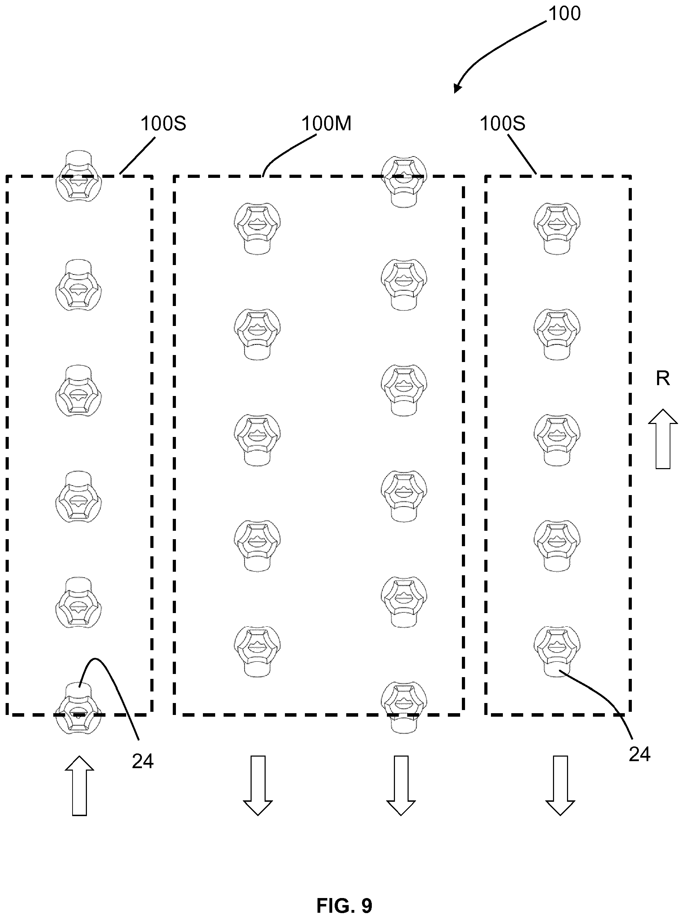

Fig. 9 shows a schematic view of a tread portion 100 of a winter tire that includes a middle portion 100M provided between two shoulder portions 100S, indicated by dashed lines, and has a rotational direction R indicated by an arrow. It is noted that the tread portion 100 is not drawn to scale and may include any suitable configuration of grooves and tread blocks.

The middle portion 100M is provided with two circumferentially extending rows of stud pins, while the shoulder portions 100S are each provided with one circumferentially extending row of stud pins. The tail portions 24 of the stud pins in the middle portion 100M and the right-hand shoulder portion 100S face opposite the rotational direction R, while the tail portions 24 of the stud pins in the left-hand shoulder portion 100S face in the rotational direction R to enable the tire to turn on icy road surfaces. However, it is possible for all rows of stud pins to face in the same direction or in different directions with respect to the tire rotational direction R.

### Reference numerals

- 10: stud pin
- 12: body
- 14: pin
- 16: top flange
- 17: front edge of top flange
- 18: shaft
- 20: bottom flange
- 22: main portion
- 24: tail portion
- 26: boundary line
- 27: outer contour
- 28: projection
- 30: arc-shaped recess
- 32: chamfered surface
- 34: body bottom surface
- 36: taper
- 38: body top surface
- 40: angled surface
- 42: pin top surface
- 44: scraping edge
- 46: tail edge
- 47: top flange side edge
- 48: top flange rear edge
- 49: pin front edge
- 50: contact point
- 52: connecting arc
- 54: pin rear edge
- 100: tread portion
- 100M: middle portion
- 100S: shoulder portion

## Claims

1. An ice grip device (10; 10'; 10") comprises a body (12) configured to be received in a recess provided in the tread portion of a tire and a pin (14; 14'; 14") connected to the body (12),
wherein the body (12) comprises a top flange (16; 16'; 16") connected to the pin (14; 14'; 14"), a shaft (18) and a bottom flange (20) arranged adjacent to one another along a longitudinal axis (Z), each having a cross-sectional area perpendicular to the longitudinal axis (Z),
wherein the cross-sectional area of the shaft (18) is smaller than the cross-sectional area of the top flange (16; 16'; 16") and the bottom flange (20), respectively,
wherein the bottom flange (20) includes a main portion (22) centered on the longitudinal axis (Z) and a single tail portion (24) that extends radially outwardly from the main portion (22) with respect to the longitudinal axis (Z),
**characterized in that**
the bottom flange (20) further comprises first and second projections (28a, 28b) that form a Y-shape with the tail portion (24), in particular with at least one of the first and second projections (28a, 28b) and the tail portion (24) having a curved edge (46).

2. The device (10; 10'; 10") according to claim 1, wherein the tail portion (24) has a tail width (W₁) that is smaller than or equal to a cross-sectional width (W₂) of the shaft (18).

3. The device (10; 10'; 10") according to claim 1 or claim 2, wherein the main portion (22) of the bottom flange (20) can be enclosed by a boundary line (26) centered on the longitudinal axis (Z), in particular a circular boundary line (26), and the tail portion (24) extends at least 0.4 mm in the radial direction beyond the boundary line (26).

4. The device (10) according to any one of the preceding claims, wherein the cross-section of the top flange (16) perpendicular to the longitudinal axis (Z) surface has a substantially triangular shape (16b), in particular a substantially triangular shape (16b) with rotational symmetry of 120°, and more particularly with one of the edges of the triangular shape (16b) facing towards the tail portion (24) and extending in parallel to a tail edge (46) of the tail portion (24).

5. The device (10'; 10") according to any one of claims 1 to 3, wherein the cross-section of the top flange (16'; 16") perpendicular to the longitudinal axis (Z) has a substantially rectangular or a substantially trapezoidal shape.

6. The device (10; 10'; 10") according to any one of the preceding claims, wherein the top flange (16) or the bottom flange (20) comprises one or more arc-shaped recesses (30a, 30b) that curve inward towards the longitudinal axis (Z).

7. The device (10; 10'; 10") according to any one of the preceding claims, wherein the bottom flange (20) comprises a chamfered surface (32) that extends at an angle of 30° to 60° relative to a body bottom surface (34) extending substantially perpendicular to the longitudinal axis (Z) and/or the top flange (16; 16'; 16") comprises a taper (36) that extends at an angle (β) of 10° to 20° relative to a body top surface (38) extending substantially perpendicular to the longitudinal axis (Z).

8. The device (10; 10'; 10") according to any one of the preceding claims, wherein the pin (14; 14') comprises an angled surface (40) that extends at an angle (α) relative to a body top surface (38) extending substantially perpendicular to the longitudinal axis (Z) and a top surface (42) extending substantially parallel to the body top surface (38), with the angled surface (40) and the pin top surface (42) joining to form a scraping edge (44),
the pin (14; 14') comprises a convex rear edge (54) that curves away from the longitudinal axis (Z), and
the angle (α) of the angled surface (40) is of 10° to 25° relative to the body top surface (38), and/or wherein a height (h) of the angled surface (40) along the longitudinal axis (Z) is greater than 0.4 mm and less than or equal to 0.6 mm and/or wherein the angled surface (40) has a length (L₁) corresponding to 0.3 to 0.67 of the length (L₂) of the pin (14; 14') from a front edge (49) to a rear edge (54).

9. The device (10) according to any one of claims 1 to 7,
wherein a top surface (42') of the pin (14") is curved to form a dome shape.

10. The device (10; 10'; 10") according to any one of the preceding claims, wherein a front edge (49) of the pin (14; 14') comprises at least two contact points (50) connected by a connecting arc (52) that curves towards the longitudinal axis (Z).

11. A winter tire comprising a tread portion (100) provided with recesses and one or more devices (10; 10'; 10") according to any one of the preceding claims arranged in said recesses, wherein the tail portion (24) of one or more of the devices (10; 10'; 10") extends along a rotational direction (R) of the tire.

12. The winter tire of claim 11, wherein the tread portion (100) comprises two shoulder portions (100S) at each edge of the tread portion in a tire axial direction and a middle portion (100M) arranged between the shoulder portions (100S),
wherein the devices (10; 10'; 10") installed in at least one of the shoulder portions (100S) have a different orientation to the devices (10; 10'; 10") installed in the middle portion (100M),
in particular wherein the respective tail portions (24) of the devices (10; 10'; 10") installed in said at least one shoulder portion (100S) extend at an angle of 45°, 90° or 180° relative to the tail portions (24) of the devices (10; 10'; 10") installed in the middle portion (100M).

## Patentansprüche

1. Eisgreifvorrichtung (10; 10'; 10"), umfassend einen Körper (12), der zur Aufnahme in einer in dem Laufflächenabschnitt eines Reifens vorgesehenen Aussparung konfiguriert ist, und einen mit dem Körper (12) verbundenen Stift (14; 14'; 14"),
wobei der Körper (12) einen oberen Flansch (16; 16'; 16"), der mit dem Stift (14; 14'; 14") verbunden ist, einen Schaft (18) und einen unteren Flansch (20) umfasst, die benachbart zueinander entlang einer Längsachse (Z) angeordnet sind, wobei jeder eine Querschnittsfläche senkrecht zu der Längsachse (Z) aufweist,
wobei die Querschnittsfläche des Schafts (18) kleiner als die Querschnittsfläche des oberen Flansches (16; 16'; 16") bzw. des unteren Flansches (20) ist,
wobei der untere Flansch (20) einen Hauptabschnitt (22), der auf der Längsachse (Z) zentriert ist, und einen einzigen Endabschnitt (24) umfasst, der sich von dem Hauptabschnitt (22) in Bezug auf die Längsachse (Z) radial nach außen erstreckt,
**dadurch gekennzeichnet, dass**
der untere Flansch (20) ferner einen ersten und einen zweiten Vorsprung (28a, 28b) umfasst, die eine Y-Form mit dem Endabschnitt (24) bilden, wobei insbesondere mindestens einer von dem ersten und dem zweiten Vorsprung (28a, 28b) und dem Endabschnitt (24) eine gekrümmte Kante (46) aufweist.

2. Vorrichtung (10; 10'; 10") nach Anspruch 1, wobei der Endabschnitt (24) eine Endbreite (W₁) aufweist, die kleiner als oder gleich einer Querschnittsbreite (W₂) des Schafts (18) ist.

3. Vorrichtung (10; 10'; 10") nach Anspruch 1 oder Anspruch 2, wobei der Hauptabschnitt (22) des unteren Flansches (20) von einer Begrenzungslinie (26), die auf der Längsachse (Z) zentriert ist, insbesondere einer kreisförmigen Begrenzungslinie (26), umschlossen sein kann und sich der Endabschnitt (24) mindestens 0,4 mm in der radialen Richtung über die Begrenzungslinie (26) hinaus erstreckt.

4. Vorrichtung (10) nach einem der vorhergehenden Ansprüche, wobei der Querschnitt des oberen Flansches (16) senkrecht zu der Fläche der Längsachse (Z) eine im Wesentlichen dreieckige Form (16b) aufweist, insbesondere eine im Wesentlichen dreieckige Form (16b) mit einer Rotationssymmetrie von 120°, und wobei insbesondere eine der Kanten der dreieckigen Form (16b) dem Endabschnitt (24) zugewandt ist und sich parallel zu einer Endkante (46) des Endabschnitts (24) erstreckt.

5. Vorrichtung (10'; 10") nach einem der Ansprüche 1 bis 3, wobei der Querschnitt des oberen Flansches (16'; 16") senkrecht zu der Längsachse (Z) eine im Wesentlichen rechteckige oder eine im Wesentlichen trapezförmige Form aufweist.

6. Vorrichtung (10; 10'; 10") nach einem der vorhergehenden Ansprüche, wobei der obere Flansch (16) oder der untere Flansch (20) eine oder mehrere bogenförmige Aussparungen (30a, 30b) umfasst, die sich nach innen zu der Längsachse (Z) krümmen.

7. Vorrichtung (10; 10'; 10") nach einem der vorhergehenden Ansprüche, wobei der untere Flansch (20) eine abgeschrägte Fläche (32) umfasst, die sich unter einem Winkel von 30° bis 60° relativ zu einer unteren Fläche (34) des Körpers erstreckt, die sich im Wesentlichen senkrecht zu der Längsachse (Z) erstreckt, und/oder der obere Flansch (16; 16'; 16") eine Verjüngung (36) umfasst, die sich unter einem Winkel (β) von 10° bis 20° relativ zu einer oberen Fläche (38) des Körpers erstreckt, die sich im Wesentlichen senkrecht zu der Längsachse (Z) erstreckt.

8. Vorrichtung (10; 10'; 10") nach einem der vorhergehenden Ansprüche, wobei der Stift (14; 14') eine abgewinkelte Fläche (40), die sich unter einem Winkel (α) relativ zu einer oberen Fläche (38) des Körpers erstreckt, die sich im Wesentlichen senkrecht zu der Längsachse (Z) erstreckt, und eine obere Fläche (42) umfasst, die sich im Wesentlichen parallel zu der oberen Fläche (38) des Körpers erstreckt, wobei sich die abgewinkelte Fläche (40) und die obere Fläche (42) des Stifts verbinden, um eine Schabkante (44) zu bilden,
der Stift (14; 14') eine konvexe hintere Kante (54) umfasst, die sich von der Längsachse (Z) weg krümmt, und
der Winkel (α) der abgewinkelten Fläche (40) 10° bis 25° relativ zu der oberen Fläche (38) des Körpers beträgt, und/oder wobei eine Höhe (h) der abgewinkelten Fläche (40) entlang der Längsachse (Z) größer als 0,4 mm und kleiner als oder gleich 0,6 mm ist und/oder wobei die abgewinkelte Fläche (40) eine Länge (L₁) aufweist, die 0,3 bis 0,67 der Länge (L₂) des Stifts (14; 14') von einer vorderen Kante (49) zu einer hinteren Kante (54) entspricht.

9. Vorrichtung (10) nach einem der Ansprüche 1 bis 7,
wobei eine obere Fläche (42') des Stifts (14") gekrümmt ist, um eine Kuppelform zu bilden.

10. Vorrichtung (10; 10'; 10") nach einem der vorhergehenden Ansprüche, wobei eine vordere Kante (49) des Stifts (14; 14') mindestens zwei Kontaktpunkte (50) umfasst, die durch einen Verbindungsbogen (52) verbunden sind, der sich zu der Längsachse (Z) krümmt.

11. Winterreifen, umfassend einen Laufflächenabschnitt (100), der mit Aussparungen bereitgestellt ist, und eine oder mehrere Vorrichtungen (10; 10'; 10") nach einem der vorhergehenden Ansprüche, die in den Aussparungen angeordnet sind, wobei sich der Endabschnitt (24) einer oder mehrerer der Vorrichtungen (10; 10'; 10") entlang einer Drehrichtung (R) des Reifens erstreckt.

12. Winterreifen nach Anspruch 11, wobei der Laufflächenabschnitt (100) zwei Schulterabschnitte (100S) an jeder Kante des Laufflächenabschnitts in einer Reifenaxialrichtung und einen Mittelabschnitt (100M) umfasst, der zwischen den Schulterabschnitten (100S) angeordnet ist,
wobei die Vorrichtungen (10; 10'; 10"), die in mindestens einem der Schulterabschnitte (100S) eingebaut sind, eine andere Ausrichtung als die Vorrichtungen (10; 10'; 10") aufweisen, die in dem Mittelabschnitt (100M) eingebaut sind,
wobei insbesondere sich die jeweiligen Endabschnitte (24) der Vorrichtungen (10; 10'; 10"), die in dem mindestens einen Schulterabschnitt (100S) eingebaut sind, unter einem Winkel von 45°, 90° oder 180° relativ zu den Endabschnitten (24) der Vorrichtungen (10; 10'; 10") erstrecken, die in dem Mittelabschnitt (100M) eingebaut sind.

## Revendications

1. Dispositif d'adhérence sur glace (10 ; 10' ; 10") comprenant un corps (12) configuré pour être reçu dans un évidement prévu dans la portion formant bande de roulement d'un pneumatique et une broche (14 ; 14' ; 14") connectée au corps (12),
dans lequel le corps (12) comprend une bride de sommet (16 ; 16'; 16") connectée à la broche (14 ; 14' ; 14"), une tige (18) et une bride de fond (20) agencées de manière mutuellement adjacente le long d'un axe longitudinal (Z), chacune ayant une aire de section transversale perpendiculaire à l'axe longitudinal (Z),
dans lequel l'aire de section transversale de la tige (18) est inférieure à l'aire de section transversale de la bride de sommet (16 ; 16'; 16") et de la bride de fond (20), respectivement,
dans lequel la bride de fond (20) inclut une portion principale (22) centrée sur l'axe longitudinal (Z) et une portion de queue unique (24) qui s'étend radialement vers l'extérieur depuis la portion principale (22) par rapport à l'axe longitudinal (Z),
**caractérisé en ce que**
la bride de fond (20) comprend en outre une première et une seconde projection (28a, 28b) qui réalisent une forme de Y avec la portion de queue (24), en particulier avec l'une au moins de la première et de la seconde projection (28a, 28b) et la portion de queue (24) ayant un bord incurvé (46).

2. Dispositif (10 ; 10' ; 10") selon la revendication 1, dans lequel la portion de queue (24) a une largeur de queue (W₁) qui est inférieure ou égale à une largeur de section transversale (W₂) de la tige (18).

3. Dispositif (10 ; 10' ; 10") selon la revendication 1 ou 2, dans lequel la portion principale (22) de la bride de fond (20) peut être entourée par une ligne de délimitation (26) centrée sur l'axe longitudinal (Z), en particulier une ligne de délimitation circulaire (26), et la portion de queue (24) s'étend au moins de 0,4 mm dans la direction radiale au-delà de la ligne de délimitation (26).

4. Dispositif (10) selon l'une quelconque des revendications précédentes, dans lequel la section transversale de la bride de sommet (16) perpendiculaire à la surface d'axe longitudinal (Z) a une forme sensiblement triangulaire (16b), en particulier une forme sensiblement triangulaire (16b) avec une symétrie de révolution de 120°, et plus particulièrement avec l'un des bords de la forme triangulaire (16b) faisant face à la portion de queue (24) et s'étendant parallèlement à un bord de queue (46) de la portion de queue (24).

5. Dispositif (10'; 10") selon l'une quelconque des revendications 1 à 3, dans lequel la section transversale de la bride de sommet (16 ; 16' ; 16") perpendiculaire à l'axe longitudinal (Z) a une forme sensiblement rectangulaire ou sensiblement trapézoïdale.

6. Dispositif (10 ; 10' ; 10") selon l'une quelconque des revendications précédentes, dans lequel la bride de sommet (16) ou la bride de fond (20) comprend un ou plusieurs évidements en forme d'arc (30a, 30b) qui s'incurvent vers l'intérieur en direction de l'axe longitudinal (Z).

7. Dispositif (10 ; 10' ; 10") selon l'une quelconque des revendications précédentes, dans lequel la bride de fond (20) comprend une surface chanfreinée (32) qui s'étend sous un angle de 30° à 60° relativement à une surface de fond de corps (34) s'étendant sensiblement perpendiculairement à l'axe longitudinal (Z) et/ou la bride de sommet (16 ; 16' ; 16") comprend un cône (36) qui s'étend sous un angle (β) de 10° à 20° relativement à une surface de sommet de corps (38) s'étendant sensiblement perpendiculairement à l'axe longitudinal (Z).

8. Dispositif (10 ; 10' ; 10") selon l'une quelconque des revendications précédentes, dans lequel la broche (14 ; 14') comprend une surface en angle (40) qui s'étend sous un angle (α) relativement à une surface de sommet de corps (38) s'étendant sensiblement perpendiculairement à l'axe longitudinal (Z) et une surface de sommet (42) s'étendant sensiblement parallèlement à la surface de sommet de corps (38), avec la surface en angle (40) et la surface de sommet de broche (42) se rejoignant pour former un bord racleur (44),
la broche (14 ; 14') comprend un bord arrière convexe (54) qui s'incurve en éloignement de l'axe longitudinal (Z), et
l'angle (α) de la surface en angle (40) est de 10° à 25° relativement à la surface de sommet de corps (38), et/ou dans lequel une hauteur (h) de la surface en angle (40) le long de l'axe longitudinal (Z) est supérieure à 0,4 mm et inférieure ou égale à 0,6 mm et/ou dans lequel la surface en angle (40) a une longueur (L₁) correspondant à 0,3 jusqu'à 0,67 de la longueur (L2) de la broche (14 ; 14') depuis un bord avant (49) jusqu'à un bord arrière (54).)

9. Dispositif (10) selon l'une quelconque des revendications 1 à 7, dans lequel une surface de sommet (42') de la broche (14") est incurvée pour réaliser une forme de dôme.

10. Dispositif (10 ; 10' ; 10") selon l'une quelconque des revendications précédentes, dans lequel un bord avant (49) de la broche (14 ; 14') comprend au moins deux points de contact (50) connectés par un arc de connexion (52) qui s'incurve en direction de l'axe longitudinal (Z).

11. Pneumatique d'hiver comprenant une portion formant bande de roulement (100) dotée d'évidements et d'un ou de plusieurs dispositifs (10 ; 10' ; 10") selon l'une quelconque des revendications précédentes agencés dans lesdits évidements, dans lequel la portion de queue (24) de l'un ou de plusieurs des dispositifs (10 ; 10' ; 10") s'étend le long d'un axe de rotation (R) du pneumatique.

12. Pneumatique d'hiver selon la revendication 11, dans lequel la portion formant bande de roulement (100) comprend deux portions d'épaulement (100S) au niveau de chaque bord de la portion formant bande de roulement dans une direction axiale du pneumatique et une portion médiane (100M) agencée entre les portions d'épaulement (100S),
dans lequel les dispositifs (10 ; 10' ; 10") installés dans l'une au moins des portions d'épaulement (100S) ont une orientation différente par rapport aux dispositifs (10 ; 10' ; 10") installés dans la portion médiane (100M),
en particulier dans lequel les portions de queue respectives (24) des dispositifs (10 ; 10' ; 10") installés dans ladite au moins une portion d'épaulement (100S) s'étendent sous un angle de 45°, 90° ou 180° relativement aux portions de queue (24) des dispositifs (10 ; 10' ; 10") installés dans la portion médiane (100M).
